# EUROPEAN PATENT APPLICATION

(11) **EP 0 700 848 A1**
(43) Date of publication of application: **13.03.1996**
(21) Application number: 95104644.0
(22) Date of filing: 29.03.1995
(51) Int. Cl.: B65G 47/74, B67C 3/24

(54) **Method and apparatus for inserting article into article holder**

(30) Priority: 08.09.1994 JP 214547/94
(71) Applicant: Seiko Co., Ltd., Shimizu 424 (JP)
(72) Inventor: Kusatani, Masayuki, Iharagun Shizuoka, 421-32 (JP); Kojima, Eiji, Shimizu 424 (JP); Ozeki, Yoshinobu, Suntogun, Shizuoka, 411 (JP)
(74) Representative: Schwabe - Sandmair - Marx

(57) **Abstract**

A method and an apparatus for inserting articles into holders that is capable of, at high speed and reliably, supplying the articles of a type that cannot easily be stood erect to the holders. Articles b are, in a laid down state, conveyed by conveyance means 1, the articles b are taken by delivery means 2 at a speed higher than that at which the articles b are conveyed by the conveyance means 1, the articles b are supplied to reserving portions 3a of reserving and conveyance means 3 when the operation of the reserving portions 3a of the reserving and conveyance means 3 is stopped so that the articles b are reserved in the reserving portions 3a, and the articles b are supplied from the reserving portions 3a to holders c of holder conveyance means 4 by insertion means 5.

## Description

### BACKGROUND OF THE INVENTION

### Field of the Invention

The present invention relates to a method and an apparatus for consecutively and automatically inserting articles of a type, which cannot easily be stood erect, into holders for stably holding the articles.

### Related Background Art

In the industrial field for injecting and accommodating liquid or the like into containers, containers of a type, which cannot easily be stood erect, are consecutively conveyed in such a manner that the containers are one by one accommodated in holders called receivers for holding and stably accommodating the containers and the containers are conveyed to a desired ensuing processing unit, such as an injector or a capper.

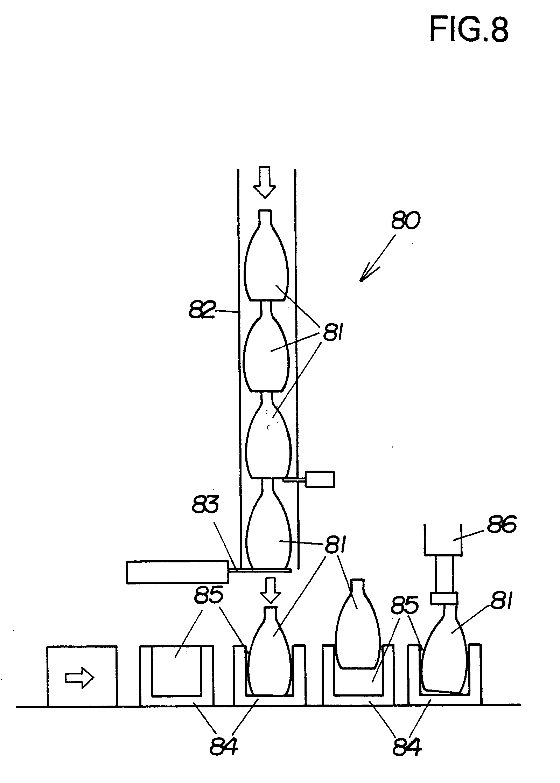

The containers are inserted into the receivers by a container insertion unit 80 having a structure as shown in Fig. 8. A multiplicity of containers 81, the directions of which are aligned, are consecutively accommodated in a vertical chute 82 while being made vertical, that is, in such a manner that the inlet/outlet ports of the containers face upwards. When a stopper 83 is opened, the containers 81 are one by one dropped from the chute 82 due to the dead weight of each container 81 so as to be inserted into holes 85 of receivers 84 that are conveyed in synchronization with opening of the stopper 83 at a position below the stopper 83.

However, if the container 81 dropped from the chute 82 comes in contact with the top end or the like of the receiver 84, insertion into the hole 85 cannot be performed smoothly. Thus, incomplete insertion (see the second container 81 from the right portion of Fig. 8) takes place such that the attitude of the container 81 is made diagonal or the container 81 is stopped at an intermediate position of the hole 85. In this case, the operation of the ensuing processing unit encounters a problem.

Accordingly, an ensuing pushing unit 86 has been employed to forcibly push the containers 81 into the holes 85. However, since soft containers 81 have unsatisfactory force for maintaining the shape thereof, critical problems arise in that the container 81 is unsatisfactorily diagonally inserted and the container 81, which does not fit the hole 85, is collapsed due to the pressure of the hole 85 (see the rightmost container 81 shown in Fig. 8).

### SUMMARY OF THE INVENTION

The present invention was found to overcome the foregoing problems and accordingly an object of the present invention is to provide a method and an apparatus for inserting articles into holders, which has an arrangement that articles are, in a laid down state, conveyed by a conveyance means, the articles are taken by a delivery means at a speed higher than that at which the articles are conveyed by the conveyance means, the articles are supplied to reserving portions of a reserving and conveyance means when the operation of the reserving portions of the reserving and conveyance means is stopped so that the articles are reserved in the reserving portions, and the articles are supplied from the reserving portions to holders of a holder conveyance means by an insertion means. Thus, the method and the apparatus according to the present invention are able to reliably supply articles into the holders at high speed.

In order to achieve the foregoing object, according to one aspect of the present invention, there is provided a method of inserting articles into holders, the method comprising the steps of: causing conveyance means to consecutively convey articles, which are usually stood erect, while laying down the articles; causing delivery means to take the articles at an end of the conveyance means at a speed higher than a speed at which the articles are conveyed by the conveyance means to introduce the articles into reserving portions of reserving and conveyance means when operation of the reserving and conveyance means is stopped so that the articles are reserved in the reserving portions; causing insertion means to supply the articles from the reserving portions to holders of holder conveyance means, which moves substantially in parallel to the reserving and conveyance means, supply of the articles being performed when operations of the reserving and conveyance means and the holder conveyance means are stopped.

Supply of the articles to the holders by the insertion means is performed in such a manner that a plurality of the articles are simultaneously supplied to a plurality of the holders in a state where the articles are reserved in a multiplicity of the reserving portions of the reserving and conveyance means or movements of the reserving and conveyance means, the holder conveyance means and the insertion means are made to be in synchronization with one another.

According to another aspect of the present invention, there is provided an insertion apparatus for inserting articles into holders, comprising: conveyance means for consecutively conveying a multiplicity of articles, which are usually stood erect, while laying down the articles; delivery means connected to an end of the conveyance means to hold one of the conveyed articles to convey the article in a predetermined direction; reserving and conveyance means connected to an end of the delivery means and having a multiplicity of article reserving portions each of which accommodates one article delivered by the delivery means; holder conveyance means which is consecutively conveyed substantially in parallel to the reserving and conveyance means and which conveys holders each of which includes an article accommodating portion; and insertion means for supplying one or a plurality of the articles to holders in synchronization with the reserving and conveyance means and the holders of the holder conveyance means.

In the foregoing structure, the holder conveyance means has attitude modifying means disposed upstream from the holder conveyance means and arranged to incline the accommodating portions of the holders toward the articles reserved in the reserving and conveyance means.

The insertion means consists of a discharging member which is separably brought into contact with an end of the article supplied to the reserving portion of the reserving and conveyance means and a pushing member for pushing out the article toward the holder in synchronization with the discharging member or the insertion means is an articulated robot that is capable of moving into multiaxis directions.

According to another aspect of the present invention, there is provided an insertion apparatus for inserting articles into holders comprising: conveyance means for consecutively conveying a multiplicity of articles, which are usually stood erect, while laying down the articles; delivery means connected to an end of the conveyance means to hold one of the conveyed articles to convey the article in a predetermined direction; holder conveyance means which is disposed adjacent to the delivery means so as to be consecutively conveyed and which conveys holders each of which includes an article accommodating portion; and insertion means made to be in synchronization with an end of the delivery means and holders of the holder conveyance means to supply the articles to the holders, wherein the insertion means has a downward introducing duct which is connected to the delivery means and through which the articles are moved so that the articles are inserted into the accommodating portions of the holders due to conveyance force of the delivery means.

The foregoing structure further comprises sub-insertion means for supplying suction force through a communication hole formed in the bottom portion of the holder to the introducing duct in synchronization with the insertion means so as to supply the articles to the holders.

The operation of the thus-constituted method and the apparatus for inserting articles into holders according to the present invention will now be described.

The method and apparatus according to the present invention consecutively convey articles, which are usually stood erect, to the accommodating portions of the holders while laying down the articles.

The articles are, while being aligned and laid down, placed on the conveyance means so as to be consecutively conveyed into a predetermined direction.

According to the first embodiment of the present invention, articles are conveyed by the conveyance means such that the articles moved to the delivery means are, at a speed higher than that at which the articles are conveyed by the conveyance means, delivered to the reserving portions of the reserving and conveyance means by the delivery means when the operation of the reserving portions of the reserving and conveyance means is stopped.

Namely, the reserving and conveyance means performs an intermittent operation so that the articles are one by one accommodated in the reserving portions of the reserving and conveyance means.

On the other hand, the holder conveyance means disposed substantially in parallel to the reserving and conveyance means is consecutively supplied with the holders, the accommodating portions of which are laid down to correspond to the laid down articles.

By operating the insertion means at this time, the articles are therefore supplied to the accommodating portions of the article holders of the reserving portions so that the articles are stably supported by the holders.

The articles can be supplied to the holders by the insertion means in such a manner that the articles are one by one supplied or a plurality of the same are supplied simultaneously. The supply can be performed while making the reserving and conveyance means and the holder conveyance means to be in synchronization with each other in a state where the movement of the articles is stopped or a movable state where the articles are being conveyed.

According to a second embodiment of the present invention, the insertion means having the introducing duct is connected between the delivery means and the holder conveyance means. The structure to the process in which the articles are one by one supplied by the delivery means in such a manner that the speed is made to be different is arranged to be the same.

The articles supplied to the introducing duct by the delivery means are dropped through the introducing duct along the inclination of the introducing duct due to the conveyance force so that the articles are inserted into the holders of the conveyance means on standby at the end of the introducing duct.

Articles of a type that can be incompletely inserted into the accommodating portions of the holders are, by the sub-insertion means made to be in synchronization with the insertion means, for example, sucked through the communication hole of the holder so that such articles are reliably inserted.

Other and further objects, features and advantages of the invention will be appear more fully from the following description.

### BRIEF DESCRIPTION OF THE DRAWINGS

Fig. 1 is a plan view showing the schematic structure of a first embodiment of an apparatus which employs a method of inserting articles into holders according to the present invention;
Fig. 2 is a side view showing an essential portion of the apparatus shown in Fig. 1;
Fig. 3 is a plan view showing the schematic structure of an attitude modifying means for modifying the attitude of the holders shown in Fig. 1;
Fig. 4 is a partially-broken plan view showing an example of the insertion means shown in Fig. 1;
Fig. 5 is a side view showing another example of the insertion means shown in Fig. 1;
Fig. 6 is a partially-broken side view showing the schematic structure of a second embodiment of an apparatus which employs the method of inserting articles into the holders according to the present invention;
Fig. 7 is a plan view of the apparatus shown in Fig. 6; and
Fig. 8 is view showing the schematic structure of a conventional insertion unit for inserting containers into receivers.

### DESCRIPTION OF THE PREFERRED EMBODIMENTS

An embodiment of a method and an apparatus for inserting articles into article holders according to the present invention will now be described.

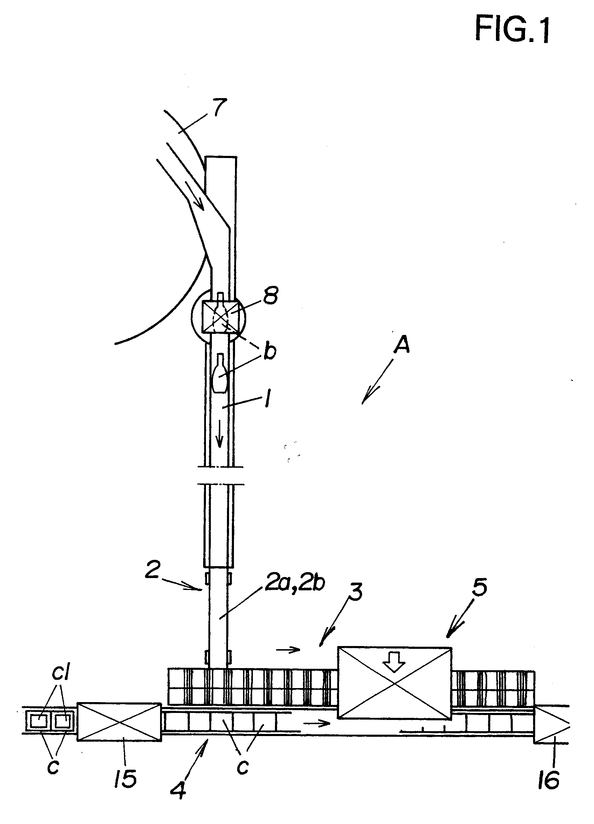

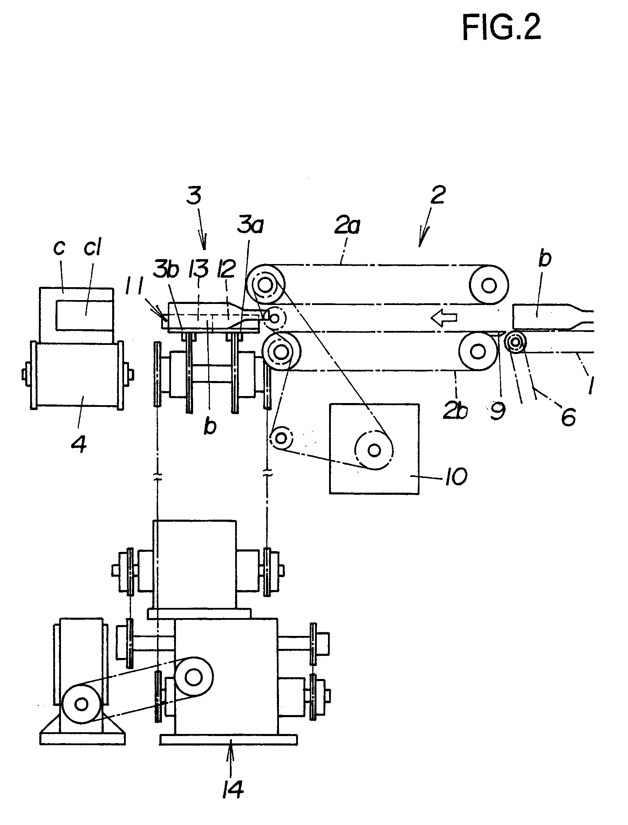

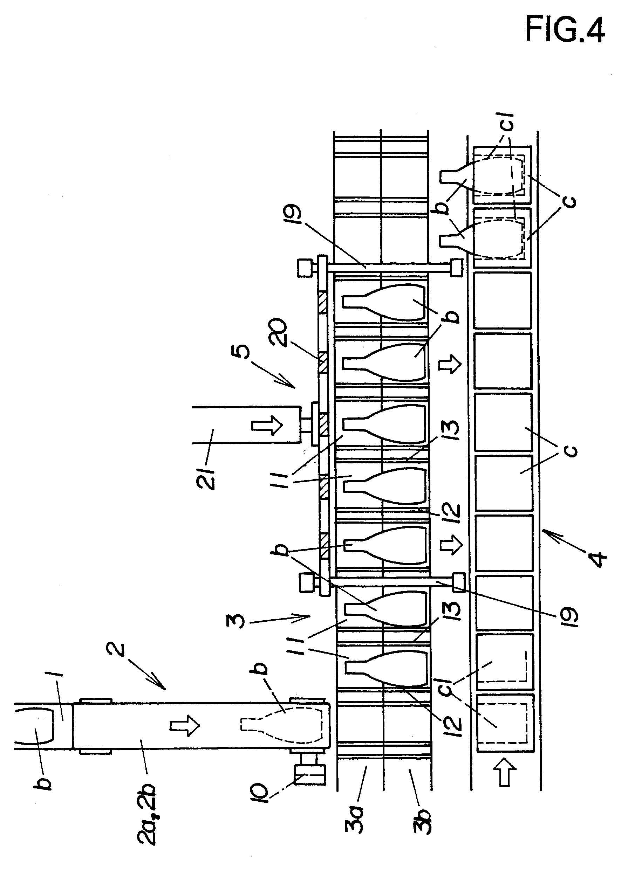

Referring to Figs. 1 to 7, symbol A represents an insertion unit for inserting articles into the holders such that articles b, which are usually stood erect, are consecutively supplied to accommodating portions c1 of holders c (generally called "receivers"), the articles b being supplied while being laid down. The articles b accommodate contents, such as detergent or seasoning liquid, the articles b being containers each having an inlet/outlet port in the upper portion thereof.

The insertion unit A according to the first embodiment basically comprises a conveyance means 1, a delivery means 2, a reserving and conveyance means 3, a holder conveyance means 4 and an insertion means 5.

The conveyance means 1 consecutively conveys a multiplicity of articles b, which are usually stood erect, the articles b being conveyed while being laid down. The conveyance means 1 comprises a belt conveyor or the like, that is driven by a drive member 6, such as a motor. In the previous process for the conveyance means 1, a rotary-type container feeder 7 is disposed which feeds the containers b in a random state. A direction aligner 8 for aligning the containers b is disposed to be communicated with the container feeder 7, the direction aligner 8 being located on the conveyance means 1 so that the containers b are sequentially aligned in a predetermined direction, that is, the bottom portions of the containers b are made forward, the containers b being conveyed toward the end portion of the conveyance means 1.

The delivery means 2 comprises a pair of belt conveyors 2a and 2b disposed vertically at the end portion of the conveyance means 1, the belt conveyors 2a and 2b being located adjacently through a joint plate 9. The belt conveyors 2a and 2b vertically press, under a predetermined pressure, one of containers b conveyed by the conveyance means 1, to convey the container b in a predetermined direction. The belt conveyors 2a and 2b are operated by a rotating unit 10 comprising a servo motor or the like, that can be numerically controlled. The conveying speed of the belt conveyors 2a and 2b is made higher than that of the conveyance means 1 so as to prevent clogging with the containers b that are consecutively conveyed from the conveyance means 1. Furthermore, the rate of the containers b to be conveyed to the reserving and conveyance means 3 is uniformed.

The reserving and conveyance means 3 is connected to the rear end of the delivery means 2 to one by one accommodate and convey the containers b delivered by the delivery means 2. The reserving and conveyance means 3 comprises a pair of attachment conveyors 3a and 3b disposed laterally, the reserving and conveyance means 3 having, in the upper portion thereof, a multiplicity of reserving portions 11 for receiving the containers b.

Each of the reserving portions 11 comprises pushing members 12 and 13 attached to the upper portions of the attachment conveyors 3a and 3b so that the width of each of the reserving portions 11 is made adjustable so as to be adaptable to various widths of the containers. The conveyor 3a is made to be a fixed side, while the conveyor 3b is made to be a movable side by means of a drive means 14 having a conventional operation mechanism. By appropriately operating the movable-side conveyor 3b, the interval between the pushing members 12 and 13 can be changed so that the reserving portions 11 adaptable to the shape of the containers b are formed.

Note that the reserving and conveyance means 3 conveys the containers b in such a manner that the two conveyors 3a and 3b are operated in synchronization with each other by the drive means 14 so that the pushing members 12 and 13 are simultaneously moved.

The conveyance means 4 for conveying the holders c has a multiplicity of the holders c each including the article accommodating portion c1, the holders c being connected sequentially. The holder conveyance means 4 is placed substantially in parallel to a direction in which the reserving and conveyance means 3 is moved, the holder conveyance means 4 being conveyed consecutively. Although the holders c are conveyed at the start of the conveyance in such a manner that their accommodating portions c1 face upwards, the attitude of the reserving and conveyance means 3 is, by an attitude modifying means 15, changed at a position, at which the holders c confront the reserving and conveyance means 3, in such a manner that their accommodating portions c1 face the containers b. Furthermore, the attitude is changed by another attitude modifying means 16 at the outlet port of the holder conveyance means 4 in such a manner that their accommodating portions c1 again face upwards.

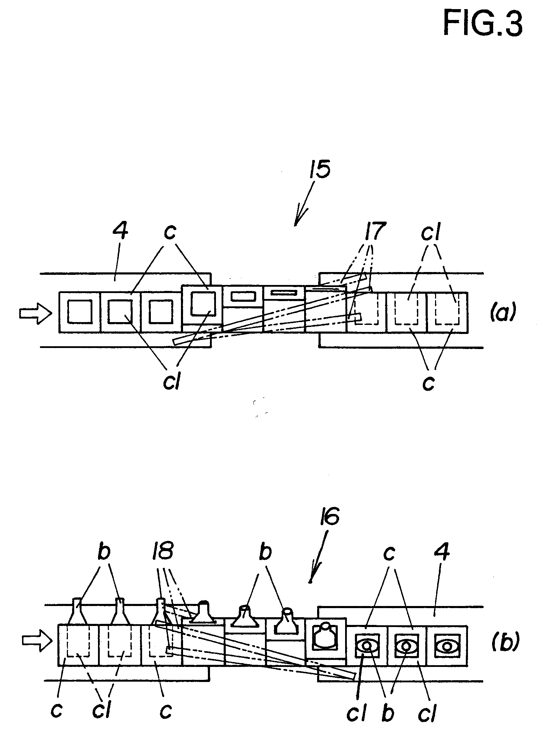

The attitude modifying means 15 is disposed upstream from the holder conveyance means 4 to put the insertion means 5 therebetween, while the attitude modifying means 16 is disposed downstream from the holder conveyance means 4. The attitude modifying means 15 and 16 respectively comprise predetermined twisting guides 17 and 18, as shown in Figs. 3 (a) and 3 (b), in the direction of the conveyance so that the holders c are inverted into a predetermined direction or to make an angle of, for example, 90° along the provided twist.

The insertion means 5 sequentially or collectively supplies the containers b to the holders c in synchronization with the reserving and conveyance means 3 and the holders c of the holder conveyance means 4. The insertion means 5 comprises a discharging member 20 supported by horizontal guides 19 and arranged to be separably brought into contact with the ends of the containers b supplied to the reserving portions 11 of the reserving and conveyance means 3; and a pushing member 21 comprising a fluid cylinder or the like that pushes out the containers b toward the holders c in synchronization with the discharging member 20.

Therefore, the unit A according to the first embodiment causes the direction aligner 8 to align the bottoms of the containers b supplied from the container feeder 7 to be made forward so that the containers b are placed while being laid down so as to be consecutively conveyed at predetermined intervals on the conveyance means 1.

The reserving portions 11 of the reserving and conveyance means 3 are adjusted such that the intervals between the pushing members 12 and 13 attached to the conveyors 3a and 3b are made to be adaptable to the width of the containers b that are processed during the conveyance of the pushing members 13. The reserving and conveyance means 3 is intermittently operated to have predetermined pause periods.

The container b moved to the delivery means 2 by the conveyance means 1 is, at a speed higher than the conveying speed of the conveyance means 1, supplied to the reserving portion 11 of the reserving and conveyance means 3 by the delivery means 2 when the operation of the reserving portions 11 of the reserving and conveyance means 3 is stopped. Thus, a multiplicity of the containers b, each of which is accommodated in the reserving portion 11, are placed.

The holder conveyance means 4 for conveying the holders c disposed to substantially run parallel to the reserving and conveyance means 3 receives the multiplicity of holders c which are sequentially supplied from the reserving portions 11. The attitude modifying means 15 disposed at the start position of the holder conveyance means 4 to correspond to the containers b supplied to the reserving portions 11 while being laid down modifies the attitude of the accommodating portions c1 from the upward attitude to the laid-down attitude.

By operating the discharging member 20 of the insertion means 5 at this time, the containers b accommodated in a predetermined number of the reserving portions 11 are supplied to the accommodating portions c1 of the holders c. The supplied containers b are stably supported while being laid down by the holders c. The foregoing insertion operation is performed when the operation of the holder conveyance means 4 is stopped.

Note that the containers b may be one by one supplied to the holders c by the insertion means 5.

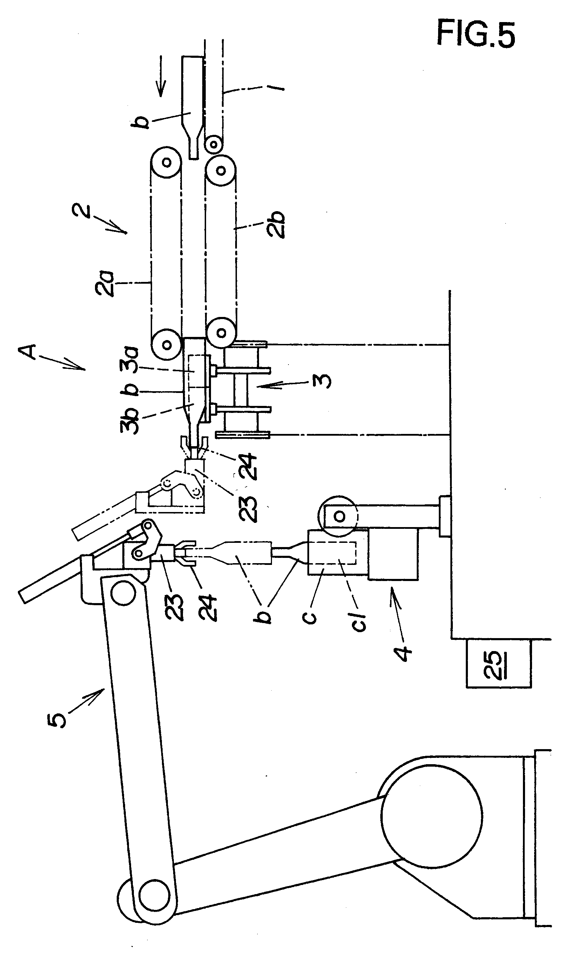

In this embodiment, the insertion means 5 may employ an articulated robot having a structure as shown in Fig. 5 that is capable of moving into multiaxis directions. In this case, the containers b conveyed by the conveyance means 1 and the delivery means 2 in such a manner that the inlet/outlet portions of the containers b are made forward are held at the inlet/outlet portions thereof by a robot hand 24 operated by an operating member 23, such as a fluid cylinder. Then, the containers b are inverted by an angular degree of 90° and conveyed into the accommodating portions c1 of the holders c on the holder conveyance means 4 disposed substantially in parallel to the reserving and conveyance means 3 such that insertion starts from the bottom of the container b. In the foregoing case, it is preferable that the accommodating portions c1 of the holders c be placed on the holder conveyance means 4 while being caused to face upwards.

A plurality of the robot hands 24 may be provided although omitted from illustration so as to be capable of simultaneously holding a plurality of the containers b.

In this embodiment, the supply of the containers b to the holders c by the insertion means 5 can be performed such that the movements of the reserving and conveyance means 3, the holder conveyance means 4 and the insertion means 5 are made synchronous with one another on the basis of data inputted to a control means 25. As a result, the containers b can be efficiently be inserted.

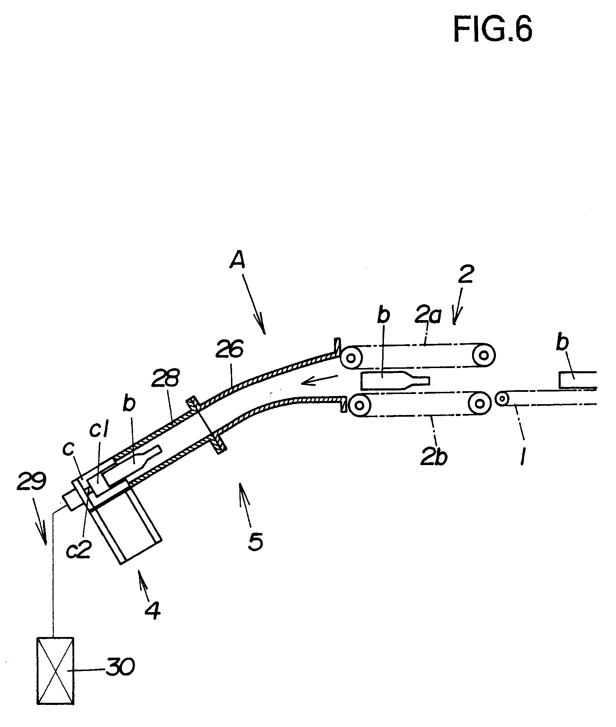

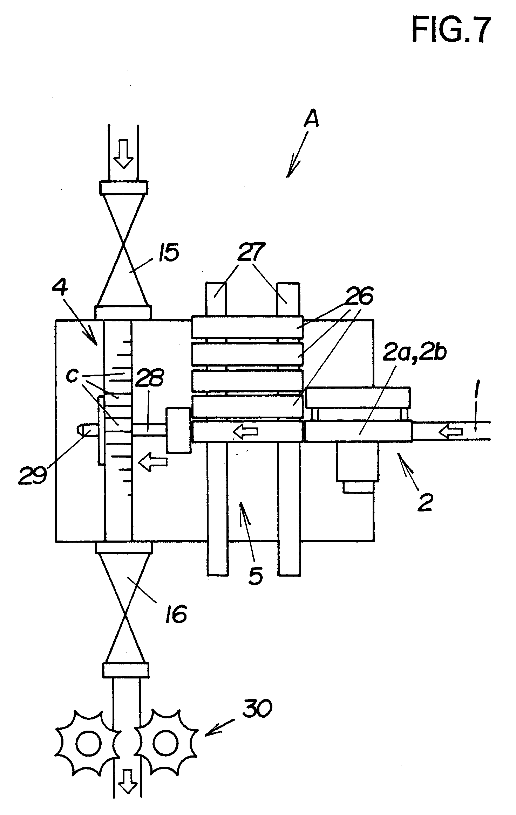

A second embodiment of the present invention will now be described with reference to Figs. 6 and 7.

In this embodiment, the containers b supplied from the conveyance means 1 are supplied to the ensuing process while being held one by one by the delivery means 2; the thus-realized moving force and the dead weight of the container b cause the containers b to slide on an inclined conveyance passage; and thus the containers b are inserted into the accommodating portions c1 of the holders c on the holder conveyance means 4 disposed below the conveyance passage. The insertion unit A according to this embodiment comprises the conveyance means 1, the delivery means 2, the holder conveyance means 4 and the insertion means 5. Since the conveyance means 1, the delivery means 2 and the holder conveyance means 4 have the same basic structures as those according to the foregoing embodiment, their detailed descriptions are omitted here.

The insertion means 5 has downward pipe-like introducing ducts 26 each of which is connected to the delivery means 2 and through which the containers b are able to smoothly path through.

The introducing ducts 26 are, as shown in Fig. 7, movably attached to a moving means 27 to be adaptable to the size of the containers b. An introducing member 28 corresponding to the holder C of the holder conveyance means 4 is connected to the introducing ducts 26.

The attitude modifying means 15 and 16 for changing the attitude of the placed containers b are respectively disposed upstream and downstream from the holder conveyance means 4 so that the attitude of the containers b is modified to correspond to the angle of inclination of the introducing ducts 26 and thus the containers b are smoothly inserted.

To reliably insert the containers b into the holders c, a sub-insertion means 29 is provided in such a manner that a suction member 30 using, for example, vacuum pressure is connected to a communication hole c2 formed in the holder C, as shown in Fig. 6. If the container b, which has passed through the introducing duct 26 and the introducing member 28, is checked at an intermediate position in the accommodating portion c1 of the holder c, the vacuum pressure is applied to suck the checked container b so that the container b is stably accommodated in the accommodating portion c1.

It should be noted that the sub-insertion means 29 may comprise a projection rod or a pressure conveyance means using air pressure (not shown) for urging the container b to move in the conveyance direction.

Referring to Fig. 7, reference numeral 30 represents a delivery member disposed downstream from the holder conveyance means 4 such that it one by one holds the holder c to deliver the holder c to the ensuing process.

As described above, the thus-constituted insertion unit according to the present invention has the arrangement that articles are, in a laid down state, supplied to the accommodating portions of the holders through the delivery means by the insertion means. Therefore, the articles can smoothly be inserted into the holders while preventing incomplete insertion such that the attitude of the inserted article is made diagonal or the article is stopped at an intermediate position of the accommodating portion. As a result, a bad influence on the processing machine for the ensuing process can be prevented.

Since the insertion of the articles into the holders in the laid down state enables the height of the unit to be lowered satisfactorily as compared with the conventional vertical type unit, the insertion unit according to the present invention can easily be manufactured and the maintenance operation facility at the time of use can be improved. Thus, the present invention provides significant effects.

Although the invention has been described in its preferred form with a certain degree of particularity, it is understood that the present disclosure of the preferred form can be changed in the details of construction and the combination and arrangement of parts may be resorted to without departing from the spirit and the scope of the invention as hereinafter claimed.

## Claims

1. A method of inserting articles into holders, said method comprising the steps of:
causing conveyance means to consecutively convey articles, which are usually stood erect, while laying down the articles;
causing delivery means to take the articles at an end of said conveyance means at a speed higher than a speed at which the articles are conveyed by said conveyance means to introduce the articles into reserving portions of reserving and conveyance means when operation of said reserving and conveyance means is stopped so that the articles are reserved in said reserving portions;
causing insertion means to supply the articles from said reserving portions to holders of holder conveyance means, which moves substantially in parallel to said reserving and conveyance means, supply of the articles being performed when operations of said reserving and conveyance means and said holder conveyance means are stopped.

2. A method of inserting articles into holders according to claim 1, wherein supply of the articles to said holders by said insertion means is performed in such a manner that a plurality of the articles are simultaneously supplied to a plurality of said holders in a state where the articles are reserved in a multiplicity of the reserving portions of said reserving and conveyance means.

3. A method of inserting articles into holders according to claim 1, wherein supply of the articles to said holders by said insertion means is performed in such a manner that movements of said reserving and conveyance means, said holder conveyance means and said insertion means are made to be in synchronization with one another.

4. An insertion apparatus for inserting articles into holders, comprising:
conveyance means for consecutively conveying a multiplicity of articles, which are usually stood erect, while laying down the articles;
delivery means connected to an end of said conveyance means to hold one of the conveyed articles to convey the article in a predetermined direction;
reserving and conveyance means connected to an end of said delivery means and having a multiplicity of article reserving portions each of which accommodates one article delivered by said delivery means;
holder conveyance means which is consecutively conveyed substantially in parallel to said reserving and conveyance means and which conveys holders each of which includes an article accommodating portion; and
insertion means for supplying one or a plurality of the articles to holders in synchronization with said reserving and conveyance means and said holders of said holder conveyance means.

5. An insertion apparatus for inserting articles into holders according to claim 4, wherein said holder conveyance means has attitude modifying means disposed upstream from said holder conveyance means and arranged to incline said accommodating portions of said holders toward the articles reserved in said reserving and conveyance means.

6. An insertion apparatus for inserting articles into holders according to claim 4, wherein said insertion means consists of a discharging member which is separably brought into contact with an end of the article supplied to said reserving portion of said reserving and conveyance means and a pushing member for pushing out the article toward said holder in synchronization with said discharging member.

7. An insertion apparatus for inserting articles into holders according to claim 4, wherein said insertion means is an articulated robot that is capable of moving into multiaxis directions.

8. An insertion apparatus for inserting articles into holders comprising:
conveyance means for consecutively conveying a multiplicity of articles, which are usually stood erect, while laying down the articles;
delivery means connected to an end of said conveyance means to hold one of the conveyed articles to convey the article in a predetermined direction;
holder conveyance means which is disposed adjacent to said delivery means so as to be consecutively conveyed and which conveys holders each of which includes an article accommodating portion; and
insertion means made to be in synchronization with an end of said delivery means and holders of said holder conveyance means to supply the articles to said holders, wherein
said insertion means has a downward introducing duct which is connected to said delivery means and through which the articles are moved so that the articles are inserted into said accommodating portions of said holders due to conveyance force of said delivery means.

9. An insertion apparatus for inserting articles into holders according to claim 8 further comprising sub-insertion means for supplying suction force through a communication hole formed in the bottom portion of said holder to said introducing duct in synchronization with said insertion means so as to supply the articles to said holders.
